Europäisches Patentamt

European Patent Office

Office européen des brevets

Veröffentlichungsnummer: **0 295 334**
**A2**

# EUROPÄISCHE PATENTANMELDUNG

Anmeldenummer: **87117799.4**

Anmeldetag: **02.12.87**

Int. Cl.⁴ **G02B 6/44**

Priorität: **16.06.87 DE 3720044**

Veröffentlichungstag der Anmeldung:
**21.12.88 Patentblatt 88/51**

Benannte Vertragsstaaten:
**AT BE CH DE ES FR GB GR IT LI NL SE**

Anmelder: **KABELMETAL ELECTRO GMBH**
**Kabelkamp 20 Postfach 260**
**D-3000 Hannover 1(DE)**

Erfinder: **Klebl, Wolfram, Dipl.-Ing.**
**Sieversdamm 2b**
**D-3004 Isernhagen 2(DE)**
Erfinder: **Brünn, Rainer**
**Schmiedeweg 10**
**D-3031 Essel(DE)**
Erfinder: **Staschewski, Harry, Dipl.-Ing.**
**Werlhofstrasse 23**
**D-3012 Langenhagen(DE)**

Verfahren zur farblichen Kennzeichnung eines Lichtwellenleiters.

Es wird ein Verfahren zur farblichen Kennzeichnung eines Lichtwellenleiters (2) angegeben, der kontinuierlich durch eine Färbeeinrichtung (10) gezogen wird. Vor und hinter der Färbeeinrichtung (10) sind Abzüge (4,5) angebracht, die mit gleicher Geschwindigkeit bewegt werden. Der vor der Färbeeinrichtung (10) angebrachte Abzug (5) wird mittels eines Tänzers (15) in seiner Drehzahl geregelt. Der Tänzer (15) liegt auf dem Lichtwellenleiter (2) mit einstellbarer Kraft auf.

Fig. 1

EP 0 295 334 A2

Die Erfindung betrifft ein Verfahren zur farblichen Kennzeichnung eines Lichtwellenleiters, welcher mittels eines in seiner Drehzahl regelbaren, hinter einer Färbeeinrichtung angeordneten Abzugs von einer Ablaufspule abgezogen, durch die Färbeeinrichtung hindurchgezogen und nach Trocknung der aufgebrachten Farbe auf eine Spule aufgewickelt wird (DE-PS 34 07 520).

Fernmeldekabel mit Lichtwellenleitern - im folgenden der Einfachheit halber als "LWL-Kabel" bzw. "LWL" bezeichnet - sind Kabel, die eine beliebige Anzahl von aus Glas oder Kunststoff bestehenden LWL aufweisen. Die LWL werden in der Nachrichtentechnik als Ersatz für die bisher üblichen metallischen Leiter verwendet. Sie sind in der Seele eines LWL-Kabels untergebracht. die von einem äußeren Schutzmantel umgeben ist.

Gegenüber den metallischen Leitern haben die LWL eine Reihe von Vorteilen. Sie sind unter anderem bis zu bestimmten Radien gut biegbar und haben kleine Durchmesser, so daß der Kabelquerschnitt klein gehalten werden kann. Auf der anderen Seite sind die LWL aber relativ spröde und empfindlich gegen zu hohe Zug- und Druckbelastungen. Sie müssen daher bei der Herstellung von LWL-Kabeln mit großer Sorgfalt behandelt werden. Das gilt auch bei der Einfärbung der LWL mit unterschiedlichen Farben und bei der Anbringung anderer Markierungen, die für eine einwandfreie Identifizierung der einzelnen LWL in Kabelverbund für Montage- und Verbindungszwecke erforderlich ist.

Bei dem bekannten Verfahren nach der eingangs erwähnten DE-PS 34 07 520 wird ein LWL zur kontinuierlichen Einfärbung seiner Oberfläche durch eine Farbkammer geführt. Die Eintritts- und die Austrittsöffnung der Farbkammer sind mit dicht am LWL anliegenden Nippeln versehen, damit die in der Farbkammer vorhandene Farbe nicht austreten kann. Diese Nippel stellen Festpunkte dar, die Beschädigungen des LWL hervorrufen können, wenn derselbe nicht exakt und schwingungsfrei in die Farbkammer eingeführt wird. Das gilt insbesondere dann, wenn der LWL mit hoher Abzugsgeschwindigkeit durch die Farbkammer und nachfolgende Bearbeitungsstationen hindurchgezogen wird. Eine ungeradlinige und insbesondere nicht - schwingungsfreie Führung des LWL kann außerdem leicht zu einer unvollständigen Einfärbung desselben führen.

Der Erfindung liegt die Aufgabe zugrunde, ein Verfahren zur farblichen Kennzeichnung eines LWL anzugeben, das unabhängig von der Abzugsgeschwindigkeit eine schwingungsfreie Führung des LWL durch alle Behandlungsstationen gewährleistet.

Diese Aufgabe wird bei einem Verfahren der eingangs geschilderten Art gemäß der Erfindung dadurch gelöst,
- daß der LWL vor der Färbeeinrichtung über einen mit regelbarer Drehzahl antreibbaren zweiten Abzug geführt wird, dessen Geschwindigkeit unter Einsatz eines hinter demselben auf dem LWL aufliegenden Tänzers geregelt wird, und
- daß den beiden Antrieben der beiden Abzüge die gleiche Solldrehzahl aufgegeben wird.

Mit diesem Verfahren wird der LWL zwischen dem zweiten Abzug und dem ersten Abzug völlig gleichförmig mit der gleichen, geregelten Geschwindigkeit bewegt, da die beiden Abzüge mit der gleichen Solldrehzahl angetrieben werden. Fertigungsbedingte Einwirkungen auf den LWL werden außerdem über den Tänzer, durch welchen die Geschwindigkeit des zweiten Abzugs geregelt wird, in kürzester Zeit ausgeglichen. Es ist dadurch insgesamt sichergestellt, daß der LWL völlig geradlinig, d. h. schwingungsfrei, durch die Färbeeinrichtung und folgende Bearbeitungsstationen geführt ist. Eine Beschädigung des LWL ist bei diesem Verfahren ausgeschlossen und ein einwandfreier Farbauftrag ist sichergestellt.

Die Auflagekraft des Tänzers auf dem LWL läßt sich beispielsweise durch ein verstellbares Gewicht besonders leicht einstellen. Unterschiedlich ausgebildete LWL und unterschiedliche Abzugsgeschwindigkeiten können dadurch für die Regelung der Drehzahl der Scheibe sehr einfach berücksichtigt werden.

Das Verfahren nach der Erfindung wird anhand der Zeichnungen als Ausführungsbeispiel erläutert.

Es zeigen:

Fig. 1 eine Vorrichtung zur Durchführung des Verfahrens in schematischer Darstellung.

Fig. 2 eine Einzelheit der Vorrichtung in vergrößerter Darstellung.

Von einer Ablaufspule 1 wird ein LWL 2 in Richtung des Pfeiles 3 abgezogen. Es ist dabei unerheblich, um was für einen LWL es sich handelt. Zum Abziehen werden zwei Abzüge 4 und 5 verwendet, die beispielsweise als Scheibe oder Walze ausgebildet sind und von drehzahlgeregelten Elektromotoren 6 bzw. 7 angetrieben werden. Die Abzüge 4 und 5 können auch als Raupe oder Band ausgebildet sein. Sie ziehen den LWL 2 von der Ablaufspule 1 kommend durch alle Bearbeitungsstationen hindurch. Der behandelte LWL 2 wird zum Schluß auf eine Aufwickelspule 8 aufgewickelt, deren Drehzahl beispielsweise mittels eines Tänzers 9 regelbar ist.

Der LWL 2 wird in einer Färbeeinrichtung 10 beispielsweise auf seiner ganzen Oberfläche kontinuierlich eingefärbt. Die Färbeeinrichtung 10 kann außerdem ein Schwinggerät enthalten, mit dem auf den LWL ringförmige Markierungen aufgebracht werden. Hinter der Färbeeinrichtung 10 durchläuft der LWL 2 zumindest eine Trockenstrecke 11, bevor er zum Abzug 4 gelangt. Der LWL 2 kann beispielsweise durch eine Rolle 12 an den Abzug 4 angedrückt werden, wenn derselbe als Scheibe oder Walze oder Rad ausgebildet ist.

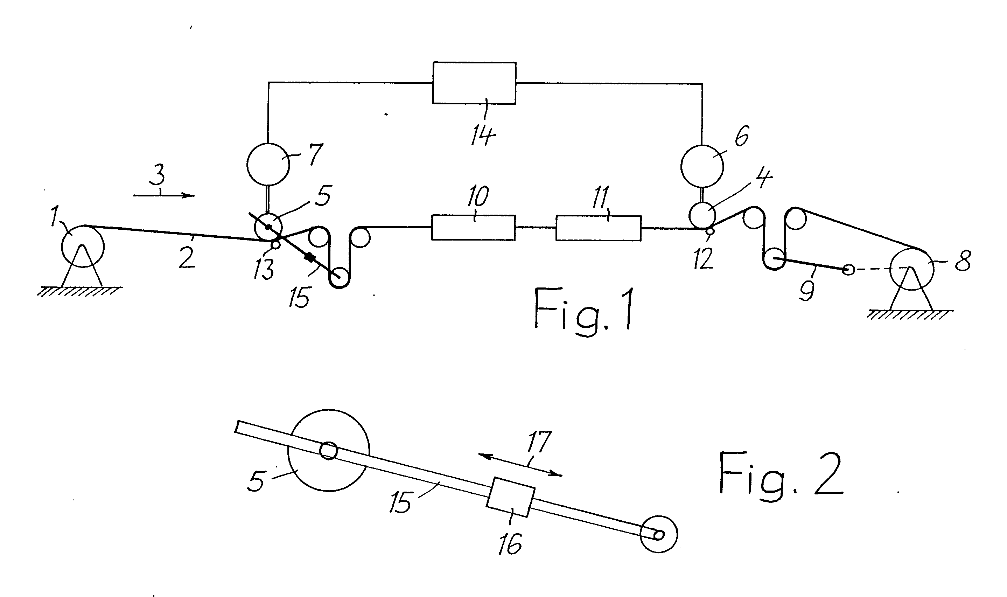

Damit der LWL 2 geradlinig und schwingungsfrei in die Färbeeinrichtung 8 eintritt, ist vor derselben der ebenfalls mit regelbarer Drehzahl antreibbare zweite Abzug 5 angeordnet. In Fig. 1 ist der zweite Abzug 5 als Scheibe dargestellt, an die der LWL 2 beispielsweise mittels einer Rolle 13 angedrückt wird. Der zweite Abzug 5 wird von dem drehzahlgeregelten Elektromotor 7 angetrieben, dem aus einer Elektronik 14 die gleiche Solldrehzahl aufgegeben wird, wie dem Elektromotor 6. Der LWL 2 hat also an beiden Abzügen 4 und 5 die gleiche Geschwindigkeit.

Die Abzüge 4 und 5 stellen für den LWL 2 jeweils eine Art Festpunkt dar, zwischen denen er "eingespannt" ist. Es ist dadurch sichergestellt, daß der LWL 2 geradlinig und schwingungsfrei in die Färbeeinrichtung 10 eintritt. Rückwirkungen aus der Färbeeinrichtung 10 und den folgenden Bearbeitungsstationen, wie beispielsweise die Trockenstrecke 11, werden für den zweiten Abzug 5 durch einen Tänzer 15 geregelt, der auf dem LWL 2 aufliegt und unmittelbar eine Veränderung der Drehzahl bzw. Geschwindigkeit des zweiten Abzugs 5 bewirkt, wenn im Ablauf des LWL 2 Änderungen eintreten.

Der Tänzer 15 ist bezüglich seiner Auflagekraft auf dem LWL 2 einstellbar. Das ist erforderlich, damit die Drehzahlregelung des zweiten Abzugs 5 auf unterschiedliche Ausführungen des LWL 2 und auf unterschiedliche Abzugsgeschwindigkeiten eingestellt werden kann. Die Auflagekraft kann prinzipiell durch Federn einstellbar gemacht werden. In bevorzugter Ausführungsform ist an dem Tänzer 15 ein Gewicht 16 angebracht, das in Richtung des Doppelpfeiles 17 verschoben werden kann. Je nach Position des Gewichts 16 ergeben sich für das freie Ende des Tänzers 15 dann unterschiedliche Auflagekräfte.

## Ansprüche

1. Verfahren zur farblichen Kennzeichnung eines Lichtwellenleiters, welcher mittels eines in seiner Drehzahl regelbaren, hinter einer Färbeeinrichtung angeordneten Abzugs von einer Ablaufspule abgezogen, durch die Färbeeinrichtung hindurchgezogen und nach Trocknung der aufgebrachten Farbe auf eine Spule aufgewickelt wird, dadurch gekennzeichnet,
- daß der Lichtwellenleiter (2) vor der Färbeeinrichtung (10) über eine mit regelbarer Drehzahl antreibbaren zweiten Abzug (5) geführt wird, dessen Geschwindigkeit unter Einsatz eines hinter demselben auf dem Lichtwellenleiter (2) aufliegenden Tänzers (15) geregelt wird, und
- daß den beiden Antrieben (6,7) der beiden Abzüge (4,5) die gleiche Solldrehzahl aufgegeben wird.

2. Verfahren nach Anspruch 1, dadurch gekennzeichnet, daß ein Tänzer (15) verwendet wird, dessen Auflagekraft auf dem Lichtwellenleiter (2), vorzugsweise durch ein verstellbares Gewicht (16), einstellbar ist.

3. Verfahren nach Anspruch 1 oder 2, dadurch gekennzeichnet, daß als zweiter Abzug (5) eine Scheibe verwendet wird, gegen die der Lichtwellenleiter (2) mittels einer Rolle (13) gedrückt wird.

Fig. 1

Fig. 2

87-30/F